# EUROPEAN PATENT APPLICATION

(11) **EP 4 757 485 A2**
(43) Date of publication of application: **10.06.2026**
(21) Application number: 26153967.0
(22) Date of filing: 23.10.2020
(51) Int. Cl.: H04W 74/0833

(54) **COMMUNICATION METHOD AND COMMUNICATION APPARATUS**

(62) Divisional of application: 20958373.1
(71) Applicant: Huawei Technologies Co., Ltd., Shenzhen, Guangdong 518129 (CN)
(72) Inventor: LIN, Yan, Shenzhen, 518129 (CN)
(74) Representative: Isarpatent

(57) **Abstract**

This application provides a communication method and a communication apparatus. A DAPS handover procedure of UE in an SUL scenario, that is, in a band combination in which an SUL is located, is provided. In the method, a receive channel, a transmit channel, and a baseband processing resource of a terminal device can be fully utilized, interruption time caused by handover is reduced, and a data throughput and cell edge coverage are improved.

## Description

### TECHNICAL FIELD

This application relates to the communication field, and specifically, to a communication method and a communication apparatus.

### BACKGROUND

Dual active protocol stack (DAPS) handover (also referred to as 0 ms handover) is essentially a type of soft handover. When handover occurs, user equipment (UE) needs to disconnect an air interface signal from a source cell after successfully completing random access to a target cell, where the air interface signal includes a signaling connection and data. In a handover process, the UE receives and sends signals of the source cell and the target cell, to implement non-interruption of services. In common hard handover, the UE immediately disconnects a signal from the source cell when handover occurs. Compared with hard handover, in DAPS handover, interruption time caused by handover can be reduced and close to or equal to 0 ms. In addition, handover reliability is improved, and communication experience with seamless handover is provided for the UE.

In the conventional technology, only a method for implementing DAPS handover in a single-carrier scenario is provided. Therefore, how to implement DAPS handover in a multi-carrier scenario becomes an important problem that urgently needs to be paid attention to.

### SUMMARY

This application provides a communication method and a communication apparatus, to implement DAPS handover in an SUL scenario.

According to a first aspect, a communication method is provided. The communication method includes: receiving first information from a source cell, where the first information indicates a carrier of the source cell, the carrier of the source cell includes at least one of a first supplementary uplink SUL carrier and a first uplink carrier, and the first SUL carrier and the first uplink carrier share a cell identifier of the source cell; receiving a dual active protocol stack DAPS handover message from the source cell, where the DAPS handover message includes information about a target cell, the information about the target cell indicates a carrier of the target cell, the carrier of the target cell includes at least one of a second SUL carrier and a second uplink carrier, and the second SUL carrier and the second uplink carrier share a cell identifier of the target cell; and sending an uplink signal on one carrier of the source cell, and initiate a random access procedure on one carrier of the target cell.

In the foregoing technical solution, when a plurality of uplink carriers exist between the source cell or the target cell and the terminal device, one of the carriers is separately selected to communicate with the source cell and the target cell. In this method, a receive channel, a transmit channel, and a baseband processing resource of the terminal device may be utilized, and interruption time caused by handover is reduced.

With reference to the first aspect, in some implementations of the first aspect, when the carrier of the source cell includes the first SUL carrier and the first uplink carrier, the sending an uplink signal on one carrier of the source cell includes:
sending the uplink signal only on a carrier on which a physical uplink control channel PUCCH is configured, where the carrier on which the PUCCH is configured is the first SUL carrier or the first uplink carrier.

With reference to the first aspect, in some implementations of the first aspect, when the carrier of the source cell includes the first SUL carrier and the first uplink carrier, the sending an uplink signal on one carrier of the source cell includes: sending the uplink signal only on the first SUL carrier.

In the foregoing technical solution, the terminal device communicates with the source cell by using an SUL carrier, so that a data throughput and cell edge coverage can be improved.

With reference to the first aspect, in some implementations of the first aspect, first downlink control information DCI from the source cell is received, and the first DCI is parsed based on expectations of the first SUL carrier and the first uplink carrier.

With reference to the first aspect, in some implementations of the first aspect, when the carrier of the target cell includes the second SUL carrier and the second uplink carrier, after the target cell is accessed, the method further includes: sending the uplink signal only on a carrier on which a physical uplink control channel PUCCH is configured, where the carrier on which the PUCCH is configured is the second SUL carrier or the second uplink carrier.

With reference to the first aspect, in some implementations of the first aspect, when the carrier of the target cell includes the second SUL carrier and the second uplink carrier, after the target cell is accessed, the method further includes: sending the uplink signal only on the second SUL carrier.

In the foregoing technical solution, the terminal device communicates with the target cell by using an SUL carrier, so that a data throughput and cell edge coverage can be improved.

With reference to the first aspect, in some implementations of the first aspect, second downlink control information DCI from the target cell is received, and the second DCI is parsed based on expectations of the second SUL carrier and the second uplink carrier.

With reference to the first aspect, in some implementations of the first aspect, the carrier of the source cell includes the first SUL carrier and the first uplink carrier. Before the receiving a DAPS handover message, the method further includes: receiving configuration information from the source cell, where the configuration information is used to release one of the first SUL carrier and the first uplink carrier.

With reference to the first aspect, in some implementations of the first aspect, after the target cell is accessed, the method further includes: receiving second information from the target cell, where the second information indicates a third carrier of the target cell; and sending the uplink signal on one of all the carriers indicated by the information about the target cell and the second information.

With reference to the first aspect, in some implementations of the first aspect, before the receiving first information, the method further includes: sending a first capability message to the source cell, where the first capability message includes indication information indicating that DAPS handover is supported in an SUL scenario.

According to a second aspect, a communication method is provided, including: sending a first capability message to a source cell, where the first capability message includes indication information indicating that DAPS handover is supported in a supplementary uplink SUL scenario; receiving first information from the source cell, where the first information indicates a carrier of the source cell, the carrier of the source cell includes at least one of a first supplementary uplink SUL carrier and a first uplink carrier, and the first SUL carrier and the first uplink carrier share a cell identifier of the source cell; and receiving a dual active protocol stack DAPS handover message from the source cell, where the DAPS handover message includes information about a target cell, the information about the target cell indicates a carrier of the target cell, the carrier of the target cell includes at least one of a second SUL carrier and a second uplink carrier, and the second SUL carrier and the second uplink carrier share a cell identifier of the target cell.

In the foregoing technical solution, the terminal device reports, to a source base station, whether UE supports DAPS handover in the supplementary uplink SUL scenario, so that a receive channel, a transmit channel, and a baseband processing resource of the terminal device can be utilized, and interruption time caused by handover can be improved.

With reference to the second aspect, in some implementations of the second aspect, the carrier of the source cell includes the first SUL carrier and the first uplink carrier. Before the receiving a DAPS handover message, the method further includes: receiving configuration information from the source cell, where the configuration information is used to release one of the first SUL carrier and the first uplink carrier.

With reference to the second aspect, in some implementations of the second aspect, the carrier of the source cell includes the first SUL carrier and the first uplink carrier. The method further includes: sending an uplink signal on one carrier of the source cell, and initiating a random access procedure on one carrier of the target cell.

With reference to the second aspect, in some implementations of the second aspect, when the carrier of the source cell includes the first SUL carrier and the first uplink carrier, the sending an uplink signal on one carrier of the source cell includes:
sending the uplink signal only on a carrier on which a physical uplink control channel PUCCH is configured, where the carrier on which the PUCCH is configured is the first SUL carrier or the first uplink carrier.

With reference to the second aspect, in some implementations of the second aspect, when the carrier of the source cell includes the first SUL carrier and the first uplink carrier, the sending an uplink signal on one carrier of the source cell includes: sending the uplink signal only on the first SUL carrier.

In the foregoing technical solution, the terminal device communicates with the source cell by using an SUL carrier, so that a data throughput and cell edge coverage can be improved.

With reference to the second aspect, in some implementations of the second aspect, first downlink control information DCI from the source cell is received, and the first DCI is parsed based on expectations of the first SUL carrier and the first uplink carrier.

With reference to the second aspect, in some implementations of the second aspect, when the carrier of the target cell includes the second SUL carrier and the second uplink carrier, after the target cell is accessed, the method further includes: sending the uplink signal only on a carrier on which a physical uplink control channel PUCCH is configured, where the carrier on which the PUCCH is configured is the second SUL carrier or the second uplink carrier.

With reference to the second aspect, in some implementations of the second aspect, when the carrier of the target cell includes the second SUL carrier and the second uplink carrier, after the target cell is accessed, the method further includes: sending the uplink signal only on the second SUL carrier.

In the foregoing technical solution, the terminal device communicates with the target cell by using an SUL carrier, so that a data throughput and cell edge coverage can be improved.

With reference to the second aspect, in some implementations of the second aspect, second downlink control information DCI from the target cell is received, and the second DCI is parsed based on expectations of the second SUL carrier and the second uplink carrier.

With reference to the second aspect, in some implementations of the second aspect, after the target cell is accessed, the method further includes: receiving second information from the target cell, where the second information indicates a third carrier of the target cell; and sending the uplink signal on one of all the carriers indicated by the information about the target cell and the second information.

According to a third aspect, a communication method is provided. The communication method includes: receiving first information from a source cell, where the first information indicates a carrier of the source cell, the carrier of the source cell includes at least one of a first supplementary uplink SUL carrier and a first uplink carrier, and the first SUL carrier and the first uplink carrier share a cell identifier of the source cell; receiving a dual active protocol stack DAPS handover message from the source cell, where the DAPS handover message includes information about a target cell, the information about the target cell indicates a carrier of the target cell, the carrier of the target cell includes at least one of a second SUL carrier and a second uplink carrier, and the second SUL carrier and the second uplink carrier share a cell identifier of the target cell; and when the at least one carrier of the source cell and the at least one carrier of the target cell have a same frequency or belong to a same band, sending an uplink signal on one or two carriers of the source cell, and initiating a random access procedure on one carrier of the target cell.

In the foregoing technical solution, the terminal device may determine whether a plurality of carrier frequencies are the same or similar, to reduce carrier release, so as to improve a data throughput and cell edge coverage.

With reference to the third aspect, in some implementations of the third aspect, when the at least one carrier of the source cell and the at least one carrier of the target cell have the same frequency or belong to the same band, the sending an uplink signal on one or two carriers of the source cell includes: When the first information includes the first SUL carrier and the first NUL carrier, the information about the target cell includes the second SUL carrier, and the second SUL carrier and the first SUL carrier have a same frequency or belong to a same band, a communication apparatus sends the uplink signal on the first SUL carrier and the first NUL carrier.

With reference to the third aspect, in some implementations of the third aspect, when the at least one carrier of the source cell and the at least one carrier of the target cell have the same frequency or belong to the same band, the sending an uplink signal on one or two carriers of the source cell includes: When the first information indicates the first SUL carrier and the first NUL carrier, the information about the target cell includes the second NUL carrier, and the second NUL carrier and the first NUL carrier have a same frequency or belong to a same band, a communication apparatus sends the uplink signal on the first SUL carrier and the first NUL carrier.

With reference to the third aspect, in some implementations of the third aspect, after the target cell is accessed, the method further includes: receiving second information from the target cell, where the second information indicates a third carrier of the target cell; and when the at least one carrier of the source cell and the at least one carrier of the target cell have the same frequency or belong to the same band, sending the uplink signal on one or two carriers of the target cell.

With reference to the third aspect, in some implementations of the third aspect, when the at least one carrier of the source cell and the at least one carrier of the target cell have the same frequency or belong to the same band, the sending an uplink signal on one or two carriers of the target cell includes: When the target cell and the carrier of the target cell configured in the second information include the second SUL carrier and the second NUL carrier, the first information includes the first SUL carrier, and the second SUL carrier and the first SUL carrier have a same frequency or belong to a same band, a communication apparatus sends the uplink signal on the second SUL carrier, the second NUL carrier, and the first SUL carrier.

With reference to the third aspect, in some implementations of the third aspect, when the at least one carrier of the source cell and the at least one carrier of the target cell have the same frequency or belong to the same band, the sending an uplink signal on one or two carriers of the target cell includes: When the target cell and the carrier of the target cell configured in the second information include the second SUL carrier and the second NUL carrier, the first information includes the first NUL carrier, and the second NUL carrier and the first NUL carrier have a same frequency or belong to a same band, a communication apparatus sends the uplink signal on the second SUL carrier, the second NUL carrier, and the first NUL carrier.

With reference to the third aspect, in some implementations of the third aspect, second downlink control information DCI from the target cell is received, and the second DCI is parsed based on expectations of the second SUL carrier and the second uplink carrier.

With reference to the third aspect, in some implementations of the third aspect, before the receiving first information, the method further includes: sending a first capability message to the source cell, where the first capability message includes indication information indicating that DAPS handover is supported in an SUL scenario.

According to a fourth aspect, a communication method is provided, including: receiving first information from a source cell, where the first information indicates one or more carriers of the source cell; receiving a dual active protocol stack DAPS handover message from the source cell, where the DAPS handover message includes information about a target cell, and the information about the target cell indicates one or more carriers of a target cell; and when one carrier of the source cell and one carrier of the target cell have a same frequency or belong to a same band, sending an uplink signal on one or two carriers of the source cell, and initiating a random access procedure on one carrier of the target cell.

In the foregoing technical solution, the terminal device may determine whether a plurality of carrier frequencies are the same or similar, to reduce carrier release, so as to improve a data throughput and cell edge coverage.

With reference to the fourth aspect, in some implementations of the fourth aspect, the carrier of the target cell includes a plurality of carriers. After accessing the target cell, the method further includes: when at least one carrier of the source cell and at least one carrier of the target cell have a same frequency or belong to a same band, sending the uplink signal on one or two carriers of the target cell.

According to a fifth aspect, a communication method is provided, including: receiving first information from a source cell, where the first information indicates a carrier of the source cell, the carrier of the source cell includes at least one of a first supplementary uplink SUL carrier and a first uplink carrier, and the first SUL carrier and the first uplink carrier share a cell identifier of the source cell; receiving a dual active protocol stack DAPS handover message from the source cell, where the DAPS handover message includes information about a target cell, the information about the target cell indicates a carrier of the target cell, the carrier of the target cell includes at least one of a second SUL carrier and a second uplink carrier, and the second SUL carrier and the second uplink carrier share a cell identifier of the target cell; and separately sending an uplink signal on the carrier of the source cell and the carrier of the target cell through time division multiplexing of a first time interval.

In the foregoing technical solution, in an SUL scenario, TDM handover with a gap is implemented, so that a DAPS handover function may also be implemented on legacy UE that supports only one carrier.

With reference to the fifth aspect, in some implementations of the fifth aspect, before the receiving a DAPS handover message, the method further includes: sending second capability information to the source cell, where the second capability information indicates the first time interval.

With reference to the fifth aspect, in some implementations of the fifth aspect, before the receiving first information, the method further includes: sending a first capability message to the source cell, where the first capability message includes indication information indicating that DAPS handover is supported in the SUL scenario.

According to a sixth aspect, a communication method is provided, including: receiving first information from a source cell, where the first information indicates one or more carriers of the source cell; receiving a dual active protocol stack DAPS handover message from the source cell, where the DAPS handover message includes information about a target cell, and the information about the target cell indicates one or more carriers of a target cell; and separately sending an uplink signal on a carrier of the source cell and a carrier of the target cell through time division multiplexing of a first time interval.

In the foregoing technical solution, in a multi-carrier scenario, TDM handover with a gap is implemented, so that a DAPS handover function may also be implemented on legacy UE that supports only one carrier.

With reference to the sixth aspect, in some implementations of the sixth aspect, before the receiving a DAPS handover message, the method further includes: sending second capability information to the source cell, where the second capability information indicates the first time interval.

According to a seventh aspect, this application provides a communication apparatus. The communication apparatus has functions of implementing the method according to any one of the first aspect to the sixth aspect or the possible implementations of the first aspect to the sixth aspect. The function may be implemented by hardware, or may be implemented by executing corresponding software by hardware. The hardware or the software includes one or more units that correspond to the foregoing function.

According to an eighth aspect, this application provides a communication device. The communication device includes at least one processor. The at least one processor is coupled to at least one memory, the at least one memory is configured to store a computer program or instructions, and the at least one processor is configured to invoke the computer program or the instructions from the at least one memory and run the computer program or the instructions, so that the communication device performs the method according to any one of the first aspect to the sixth aspect or the possible implementations of the first aspect to the sixth aspect.

In an example, the communication device may be a terminal device.

According to a ninth aspect, a processor is provided, and includes an input circuit, an output circuit, and a processing circuit. The processing circuit is configured to receive a signal by using the input circuit, and transmit a signal by using the output circuit, so that the method according to any one of the first aspect to the sixth aspect and the possible implementations of the first aspect to the sixth aspect is implemented.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the circuits are not limited in embodiments of this application.

According to a tenth aspect, this application provides a computer-readable storage medium. The computer-readable storage medium stores computer instructions, and when the computer instructions are run on a computer, the method according to any one of the first aspect to the sixth aspect or the possible implementations of the first aspect to the sixth aspect is performed.

According to an eleventh aspect, this application provides a computer program product. The computer program product includes computer program code, and when the computer program code is run on a computer, the method according to any one of the first aspect to the sixth aspect or the possible implementations of the first aspect to the sixth aspect is performed.

According to a twelfth aspect, this application provides a chip. The chip includes a processor and a communication interface. The communication interface is configured to receive a signal, and transmit the signal to the processor. The processor processes the signal, so that the method in any one of the first aspect to the sixth aspect or the possible implementations of the first aspect to the sixth aspect is performed.

According to a thirteenth aspect, this application provides a communication system. The communication system includes the communication device according to the eighth aspect.

### BRIEF DESCRIPTION OF DRAWINGS

FIG. 1 is a schematic diagram of an application scenario according to an embodiment of this application;
FIG. 2 is a schematic flowchart of a communication method according to this application;
FIG. 3 is a schematic flowchart of another communication method according to this application;
FIG. 4 is a schematic block diagram of a communication apparatus 1000 according to this application; and
FIG. 5 is a schematic diagram of a structure of a communication apparatus 10 according to this application.

### DESCRIPTION OF EMBODIMENTS

The following describes the technical solutions in this application with reference to the accompanying drawings.

The technical solutions in embodiments of this application may be applied to various communication systems such as a global system for mobile communications (GSM), a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a universal mobile telecommunications system (UMTS), a worldwide interoperability for microwave access (WiMAX) communication system, a future 5th generation (5G) system or a new radio (NR) system, vehicle-to-X (V2X), long term evolution-vehicle (LTE-V), an internet of vehicles, machine type communication (MTC), an internet of things (IoT), long term evolution-machine (LTE-M), and machine to machine (M2M), where V2X may include vehicle to network (V2N), vehicle to vehicle (V2V), vehicle to infrastructure (V2I), vehicle to pedestrian (V2P), and the like.

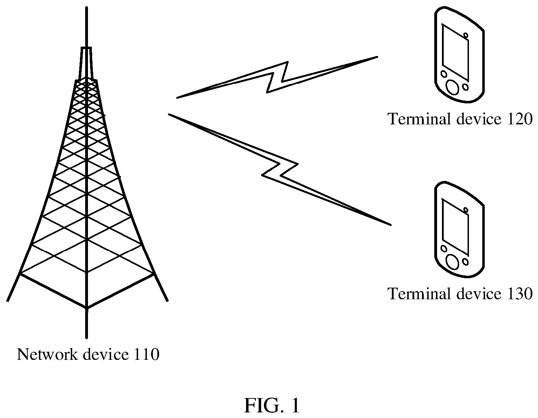

FIG. 1 is a schematic diagram of a network architecture according to an embodiment of this application. As shown in FIG. 1, a communication system in embodiments of this application may include a network device and a plurality of terminal devices. The network device may include one or more antennas. In addition, the network device may additionally include a transmitter chain and a receiver chain. A person of ordinary skill in the art may understand that the transmitter chain and the receiver chain each may include a plurality of components (such as a processor, a modulator, a multiplexer, a demodulator, a demultiplexer, or an antenna) related to signal sending and receiving.

The network device may communicate with the plurality of terminal devices. The terminal device in this embodiment of this application may also be referred to as user equipment (UE), a mobile station (MS), a mobile terminal (MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some examples of the terminal device are a mobile phone, a tablet computer, a laptop computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, a cellular phone, a cordless telephone set, a session initiation protocol (SIP) phone, a wireless local loop (WLL) station, a personal digital assistant (PDA), a handheld device having a wireless communication function, a computing device or another processing device connected to a wireless modem, a vehicle-mounted device, a wearable device, a terminal device in a 5G network, a terminal device in a future evolved public land mobile network (PLMN), and/or any other suitable device configured to perform communication in a wireless communication system. This is not limited in this embodiment of this application.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the terminal device in embodiments of this application may alternatively be a terminal device in an internet of things system. IoT is an important part of future development of information technologies. A main technical feature of the IoT is connecting things to networks using a communication technology, to implement an intelligent network for interconnection between a person and machines or between things.

In addition, in this embodiment of this application, the terminal device may further include a sensor, for example, an intelligent printer, a train detector, or a gas station. Main functions of the terminal device include collecting data (by some terminal devices), receiving control information and downlink data from a network device, sending an electromagnetic wave, and transmitting uplink data to the network device.

The network device in embodiments of this application may be a device configured to communicate with a terminal device. The network device may be a base transceiver station (BTS) in a global system for mobile communications (GSM) system or a code division multiple access (CDMA) system, may be a NodeB (NB) in a wideband code division multiple access (WCDMA) system, or may be an evolved NodeB (eNB or eNodeB) in an LTE system, may be a radio controller in a cloud radio access network (CRAN) scenario, or may be a radio network controller (RNC), a base station controller (BSC), a home base station (for example, home evolved nodeB, or home nodeB, HNB), a baseband unit (BBU). The network device may alternatively be a relay station, an access point, a vehicle-mounted device, a wearable device, a network device in a future 5G network, a network device in a future evolved PLMN, or the like, may be an access point (AP), a wireless relay node, a wireless backhaul node, a transmission point (TP), a transmission reception point (TRP), or the like in a WLAN, may be a gNB or a transmission point (TRP or TP) in a new radio system (NR) system, or one or a group of antenna panels (including a plurality of antenna panels) of a gNodeB in a 5G system, or may be a network node, for example, a baseband unit (BBU) or a distributed unit (DU), constituting a gNB or a transmission point. This is not limited in embodiments of this application.

In some deployments, a gNB may include a central unit (CU) and a DU. The gNB may further include an active antenna unit (AAU). The CU implements some functions of the gNB, and the DU implements some other functions of the gNB. For example, the CU is responsible for processing a non-real-time protocol and service, and implements functions of a radio resource control (RRC) layer and a packet data convergence protocol (PDCP) layer. The DU is responsible for processing a physical layer protocol and a real-time service, and implements functions of a radio link control (RLC) layer, a media access control (MAC) layer, and a physical (PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (RAN), or the CU may be classified into a network device in a core network (CN). This is not limited in this application.

In addition, in embodiments of this application, the network device provides a cell with a service, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell. The small cell herein may include a metro cell, a micro cell, a pico cell, a femto cell, and the like. The small cells are characterized by small coverage and a low transmit power, and are applicable to providing a high-rate data transmission service.

In addition, in embodiments of this application, the network device may include a base station (gNB), for example, a macro base station, a micro base station, an indoor hotspot, or a relay node, and has functions of: sending a radio wave to the terminal device, to implement downlink data transmission and control uplink transmission by sending scheduling information, and receiving a radio wave sent by the terminal device, to receive uplink data transmission.

The following briefly describes terms used in this application.
1. DAPS handover (also referred to as 0 ms handover) is essentially a type of soft handover. When handover occurs, UE needs to disconnect an air interface signal from a source cell after successfully completing random access to a target cell, where the air interface signal includes a signaling connection and data. In a handover process, the UE receives and sends signals of the source cell and the target cell, to implement non-interruption of services. In common hard handover, the UE immediately disconnects a signal from the source cell when handover occurs. Compared with hard handover, in DAPS handover, interruption time caused by handover can be reduced and close to or equal to 0 ms. In addition, handover reliability is improved, and communication experience with seamless handover is provided for the UE.
2. SUL: As a supplementary spectrum, an SUL improves uplink signal coverage of UE at a cell edge and a throughput of the UE in a cell center. Specifically, in the cell center, the SUL and an NR UL schedule, in TDM mode, the UE to perform uplink sending. For example, the SUL and the NR UL support TDM handover of 0 µs of SUL 1T/NUL 1T, TDM handover of 35.7 µs to 140 µs of SUL 1T/NUL 2T, TDM handover of 35.7 µs to 140 µs of SUL 2T/NUL 2T, or the like. Compared with a manner used in a scenario in which there is only one NR UL uplink carrier, in this manner, an additional uplink carrier spectrum is included, and the NR UL is in a TDD standard. The SUL supports uplink sending in all slots, and the SUL can send a signal for a downlink slot on the NR UL. Therefore, an uplink throughput gain is improved. At a cell edge, a terminal device improves uplink coverage by using the SUL. It can be learned from simulation and empirical data that, uplink coverage of an SUL carrier at a low frequency is better than that of an NR UL carrier. Therefore, the SUL carrier can be used at the cell edge to replace the NR UL carrier for uplink sending, to enhance the uplink coverage.

Stipulations of DAPS handover defined in the 3GPP standard are as follows. However, an SUL band combination is not involved in the following stipulations.
(1) If dual connectivity (DC) exists, before DAPS handover, there is air interface signaling indicating UE to release an SCG.
(2) A handover command may include a DAPS handover indication, a cell specific configuration, and a UE specific configuration. The cell specific configuration includes a cell ID, a frequency, a bandwidth, a physical random access channel (PRACH), a physical uplink control channel (PUCCH) common configuration, a physical uplink shared channel (PUSCH) common configuration, and the like.
   The UE specific configuration includes a sounding reference signal (SRS), a PUSCH dedicated configuration, a PUCCH dedicated configuration and the like.
(3) The UE receives a DAPS handover command. If CA is allowed in a source cell, the UE releases an SCell.
(4) During a DAPS handover process, only uplink sending and downlink receiving in the source cell and a target cell are involved.
(5) After receiving the DAPS handover command, the UE performs cell search, synchronization, and RA in the target cell. After RA succeeds, the UE can modify a configuration parameter of the target cell through RRC reconfiguration signaling.
(6) After RA to the target cell succeeds, the UE receives air interface signaling from the target cell to indicate to release the source cell. Then, the UE releases the source cell.
(7) UE capability: If the UE supports DAPS handover, the UE can report, to a base station by using a band combination capability of CA, whether single-uplink sending or multi-uplink sending is supported in the source cell and the target cell. The UE capability includes bandcombination, featureSetCombination, and featureSetCombinationDAPS. Herein, bandcombination refers to a band combination for NR CA, NR non-CA, and/or MR-DC, featureSetCombination refers to a feature set combination supported by the UE, and featureSetCombinationDAPS refers to a feature set combination supporting DAPS. If DAPS handover is supported in a band combination for CA or DC, the UE can report bandcombination and featureSetCombinationDAPS to the base station.

In 3GPP R15 and R16, a standalone (SA) and non-standalone (NSA) SUL band combination is defined, and includes the following configuration parameter, UE capability, and processing.
(1) An SUL and an NR UL indicate, by using the UE capability, whether concurrency is supported, that is, whether an SRS supports concurrency with a PUCCH, a PUSCH, and an SRS of another carrier. If the SRS does not support concurrency with the PUCCH, the PUSCH, and the SRS of the another carrier, time division handover is performed by default.
(2) In SA, TDM handover is performed on SUL 1T and NR UL 1T, and handover time is 0 µs. Herein, 0 µs is specified by the standard.
(3) In NSA, if a channel bandwidth and a frequency of an LTE carrier are the same as those of an SUL carrier, TDM handover is performed on SUL 1T and NR UL 1T, and handover time is 0 µs. Otherwise, TDM handover is performed on SUL 1T and NR UL 1T, and handover time is 140 µs. Herein, 0 µs and 140 µs are specified by the standard.
(4) In UL TDM handover in an SA SUL band combination, simultaneous sending of a maximum of two uplink channels are supported. Cases are shown as follows, where a carrier 1 is an SUL, and a carrier 2 is an NR UL.
   Case 1: 1 Tx on carrier 1 and 1 Tx on carrier 2 (namely, 1T+1T)
   Case 2: 0 Tx on carrier 1 and 2 Tx on carrier 2 (namely, 0T+2T)
(5) An SUL cell specific configuration exists only when an NUL cell specific configuration exists.
(6) RA may be performed on the SUL or NUL, and an entire RA procedure needs to be completed on a selected single carrier.

1. The base station may specify any carrier for performing random access, and may perform reconfiguration by using a PDCCH order or an RRC.
2. If the base station does not specify a carrier, and a cell specific configuration includes two carriers, the UE selects, based on signal quality, a carrier for performing RA. A common configuration includes a threshold rsrp-ThresholdSSB-SUL. The UE selects an SUL carrier for access only when a reference signal received power (reference signal received power, RSRP) value measured by the UE on a downlink carrier is less than the threshold.

A maximum of two transmit channels are supported in UL TDM handover in the SA SUL band combination. The details are as follows.
(1) A TDM handover gap length is {35 µs, 140 µs, 210 µs}.
(2) TDM handover is reported to the base station through the UE capability. A candidate capability value is {option 1, option 2, both option 1 and option 2}.

Option 1 means that if the base station is configured with UL TDM, the base station cannot schedule the carrier 2 in Case 1, that is, only TDM of the carrier 1 and the carrier 2 is supported, and concurrency of the carrier 1 and the carrier 2 is not supported. Refer to Table 1.

**Table 1**

| | Quantity of transmit channels (carrier 1 + carrier 2) | Quantity of antenna ports for UL transmission (carrier 1 + carrier 2) |
|---|---|---|
| Case 1 | 1T+1T | 1P+0P |
| Case 2 | 0T+2T | 0P+2P, 0P+1P |

Option 2 means that if the base station is configured with UL TDM, the base station may schedule the carrier 1 or the carrier 2 separately, or may schedule the carrier 1 and the carrier 2 at the same time, that is, concurrency of the carrier 1 and the carrier 2 is supported. Refer to Table 2.

**Table 2**

| | Quantity of transmit channels (carrier 1 + carrier 2) | Quantity of antenna ports for UL transmission (carrier 1 + carrier 2) |
|---|---|---|
| Case 1 | 1T+1T | 1P+0P, 1P+1P, 0P+1P |
| Case 2 | 0T+2T | 0P+2P, 0P+1P |

(3) In UL TDM, the RRC specifies a carrier on which a handover gap is located. In an SA SUL scenario, a gap may be located on an NR UL carrier or an SUL carrier, and is specified by uplinkTxSwitchingCarrier parameter.

(4) The base station specifies, by using uplinkTxSwitchingCarrier of the RRC, a carrier that can be dynamically switched. A maximum of two transmit channels can be transmitted on the carrier. Dynamic switching can be performed only once in a single slot.

(5) In UL TDM, interruption is allowed to be introduced to downlinks of a carrier 1 or a carrier 2 in some band combinations, except for some band combinations. The cause is that UL TDM handover also introduces interruption of downlink receiving due to different radio frequency structures of UE, such as coupling between a UL and a DL (DL).

(6) In UL TDM, no additional TDM pattern is introduced for the SA SUL band combination.

(7) In UL TDM, sending of a PRACH preamble, UE CSI computation time, an SRS, and PUSCH preparation procedure time all introduce relaxed processing time caused by a handover gap.

In the existing standard, related DAPS handover processing of the UE in the SUL scenario is not specified. Therefore, this application provides a handover method in an SUL band combination, to reduce a time interruption caused by handover in this scenario, and improve a handover success rate.

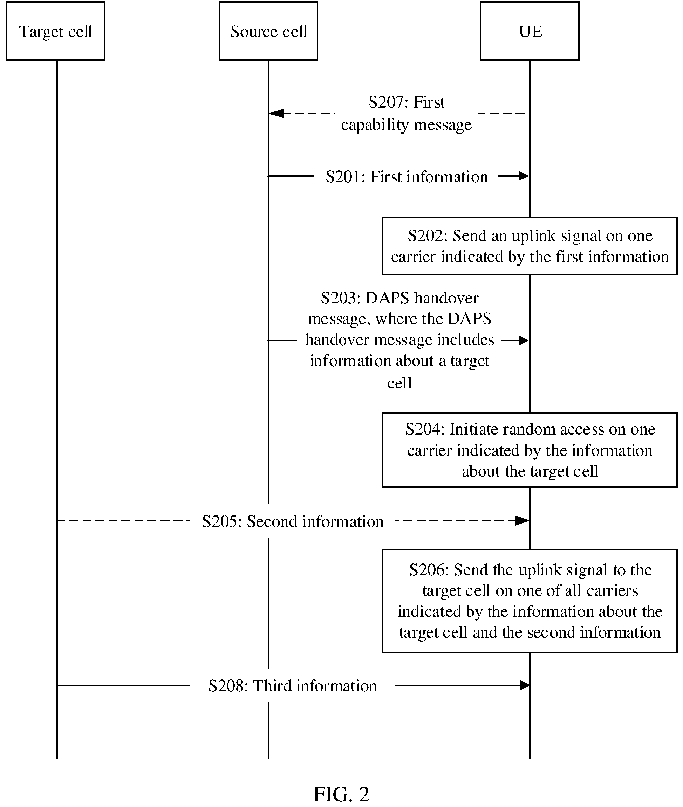

FIG. 2 is a schematic flowchart of a communication method according to this application.

S201: A terminal device (that is, an example of a communication apparatus) receives first information from a source cell.

The first information indicates a carrier of the source cell, the carrier of the source cell includes at least one of a first supplementary uplink SUL carrier and a first uplink carrier, and the first SUL carrier and the first uplink carrier share a cell identifier of the source cell. In an example, in this embodiment, an example in which the first uplink carrier is a first NR UL carrier (referred to as a first NUL carrier for short below) is used for description.

It should be understood that the first SUL carrier and the first NUL carrier are uplink carriers that are configured in the source cell for the terminal device to communicate with the source cell.

Optionally, the first information further includes source cell information (that is, a resource of the source cell). The source cell information is described in S203. Details are not described herein.

S202: The terminal device sends an uplink signal on one carrier indicated by the first information.

Specifically, when the first information in S201 indicates only one uplink carrier, the terminal device sends the uplink signal on the carrier. When the first information indicates two uplink carriers: the first SUL carrier and the first NUL carrier, the terminal device needs to select one carrier from the two uplink carriers to send the uplink signal. Herein, it may also be understood that the terminal device selects one carrier from the two uplink carriers to maintain wireless communication with the source cell.

Specifically, the cell information of the source cell includes a cell specific configuration and a UE specific configuration. A cell specific configuration parameter includes a cell ID, a frequency, a bandwidth, a PRACH channel, a PUCCH channel common configuration, a PUSCH channel common configuration, and the like. A UE specific configuration parameter includes an RS, a PUSCH channel dedicated configuration, and a PUCCH channel dedicated configuration. An SRS is a type of an RS.

Optionally, if two uplink carriers are configured, the terminal device sends the uplink signal on a carrier that is in the first SUL carrier and the first NUL carrier and on which a PUCCH is configured. The carrier on which the PUCCH is configured may be a carrier configured with a PUCCH channel dedicated configuration.

Optionally, the terminal device selects to fall back to the first SUL carrier to send the uplink signal.

Optionally, if two uplink carriers are configured, the terminal device may further receive configuration information from the source cell, where the configuration information is used to release one of the first SUL carrier and the first NUL carrier. Optionally, the configuration information may be sent before S203.

It should be noted that the terminal receives first downlink control information (DCI) from the source cell, and the terminal device needs to parse the first DCI based on expectations of the first SUL carrier and the first uplink carrier. Specifically, if two carriers are configured in the source cell, an NUL/SUL indicator field in the first DCI occupies x bits. If one carrier is configured in the source cell, an NUL/SUL indicator field in the first DCI occupies y bits. For example, two carriers are configured in the source cell. In S302, even if the UE subsequently sends the uplink signal to the source cell on only one of the carriers, the terminal device still needs to parse the NUL/SUL indicator field in the DCI based on the x bits. Briefly, the terminal device needs to parse, based on an actual quantity of carriers configured in the source cell, a bit corresponding to the received first DCI.

Optionally, when a carrier on which the uplink signal is located includes a sounding reference signal (SRS), the terminal device sends the SRS to the source cell. When a carrier on which the uplink signal is located does not include an SRS, the terminal device does not send the SRS.

S203: The terminal device receives a DAPS handover message from the source cell.

The DAPS handover message includes information about a target cell, the information about the target cell indicates a carrier of the target cell, the carrier of the target cell includes at least one of a second SUL carrier and a second uplink carrier, and the second SUL carrier and the second uplink carrier share a cell identifier of the target cell. In an example, in this embodiment, an example in which the second uplink carrier is a second NR UL carrier (referred to as a second NUL carrier for short below) is used for description.

It should be understood that the second SUL carrier and the second NUL carrier are uplink carriers that are configured in the source cell for the terminal device for communication between the target cell and the terminal device.

The cell information of the target cell includes a cell specific configuration and a UE specific configuration. It should be noted that the cell specific configuration of the target cell can be modified only through handover or addition of a secondary cell (SCell).

Optionally, if the ID of the target cell is different from the ID of the source cell, the DAPS handover message needs to include the cell specific configuration. If the IDs are the same, the cell specific configuration may be not included, and the terminal device inherits the cell specific configuration of the source cell.

S204: The terminal device initiates a random access procedure on one carrier indicated by the information about the target cell.

Specifically, when the information about the target cell indicates only one uplink carrier in S203, the terminal device initiates random access on the carrier. When the information about the target cell indicates two uplink carriers: the second SUL carrier and the second NUL carrier, the terminal device selects one carrier from the two uplink carriers to perform random access (RA). A carrier of the two carriers used to perform random access is not specifically limited in this application.

Optionally, a base station selects an optimal carrier based on content such as a measurement result report of reference signal received power (RSRP) and/or a measurement result report of reference signal received quality (RSRQ) that are/is reported by the terminal device, or the SRS sent by the terminal device, to specify the terminal device to perform random access on the carrier.

Optionally, if two uplink carriers are configured, the terminal device selects, by using an RSRP threshold, one carrier for access. The terminal device selects the second SUL carrier for access only when the RSRP measured by the terminal device is less than the threshold.

It should be understood that the terminal device always performs random access on one carrier, including an uplink carrier with hybrid automatic repeat request (HARQ) acknowledgement (ACK) feedback.

Optionally, random access may be a contention-based random access or non-contention-based random access. This is not specifically limited in this application.

Optionally, the source cell may configure a DAPS handover command in an information element (IE), for example, ReconfigurationWithSync and RadioBearerConfig of RRCReconfiguration.

Optionally, a random access (RA) parameter of the target cell may be included in the cell specific configuration.

Optionally, a reconfigurable carrier is different from a carrier of the target cell for RA. For example, the carrier of the target cell includes two carriers: the second NUL carrier and the second SUL carrier, and RA is performed on the second NUL carrier. The uplink signal may be subsequently sent on the second SUL carrier through RRC reconfiguration.

Optionally, when the information about the target cell indicates two uplink carriers: the second SUL carrier and the second NUL carrier, after the terminal device accesses the target cell, the terminal device needs to select one carrier from the two uplink carriers to send the uplink signal.

Optionally, if two uplink carriers are configured, the terminal device sends the uplink signal on a carrier that is in the second SUL carrier and the second NUL carrier and on which a PUCCH is configured.

Optionally, if two uplink carriers are configured, the terminal device selects to fall back to the second SUL carrier to send the uplink signal.

It should be noted that, when the terminal receives second DCI from the target cell, the terminal device needs to parse the second DCI based on expectations of the second SUL carrier and the second uplink carrier. Specifically, if two carriers are configured in the target cell, a UL/SUL indicator field in the second DCI occupies x bits. If one carrier is configured in the target cell, a UL/SUL indicator field in the second DCI occupies y bits. For example, two carriers are configured in the target cell. Even if the UE subsequently sends the uplink signal to the target cell on only one of the carriers, the terminal device still needs to parse the UL/SUL indicator field in the DCI based on the x bits. Briefly, the terminal device needs to parse, based on an actual quantity of carriers configured in the target cell, a bit corresponding to the received second DCI.

It should be understood that the terminal device performs synchronization, cell search, RA, signal sending, and signal reception in the target cell based on the DAPS handover message in S203 and the carrier determined in S204. Details are not described in this application.

Optionally, after the terminal device successfully performs random access to the target cell, the method further includes S205: The terminal device receives second information from the target cell. The second information includes configuration information of the second SUL carrier and/or the second NUL carrier (that is, an example of a third carrier).

It should be understood that, in this application, uplink sending is performed simultaneously in the source cell and the target cell during DAPS handover.

Optionally, if the information about the target cell required by the terminal device is configured in the DAPS handover message in S202, in this step, the information about the target cell may not be configured for the terminal device in the second information.

Optionally, if a part of the information about the target cell required by the terminal device is configured in the DAPS handover message in S202, the target cell may configure all or the required part of the information about the target cell for the terminal device in the second information. This is not specifically limited in this application.

S206: The terminal device sends the uplink signal to the target cell on one of all the carriers indicated by the information about the target cell and the second information.

Optionally, if the carrier indicated by the information about the target cell is the same as the carrier indicated by the second information, for example, the carrier indicated by the information about the target cell in S203 includes the second NUL carrier and the second SUL carrier, and the carrier indicated by the second information in S205 includes the second NUL carrier and the second SUL carrier, the terminal device sends the uplink signal on the carrier that is in the second NUL carrier and the second SUL carrier and on which the PUCCH is configured; or the terminal device sends the uplink signal on the second SUL carrier.

Optionally, if the carrier indicated by the information about the target cell is the same as the carrier indicated by the second information, for example, the carrier indicated by the information about the target cell in S203 is the second SUL carrier, and the carrier indicated by the second information in S205 is the second SUL carrier, the terminal device sends the uplink signal to the target cell on the second SUL carrier.

Optionally, if the carrier indicated by the information about the target cell is different from the carrier indicated by the second information, for example, the carrier indicated by the information about the target cell in S203 includes the second NUL carrier and the second SUL carrier, and the carrier indicated by the second information in S205 is the second SUL carrier, even if the carrier on which the terminal device initiates random access in S204 is the second NUL carrier, the terminal device still sends the uplink signal to the target cell on the second SUL carrier, that is, preferentially meets the carrier indicated by the second information.

Optionally, in S204, before the terminal device receives the first information, the method further includes S207: The terminal device sends a first capability message to the source cell. The first capability message includes indication information indicating that DAPS handover is supported in an SUL scenario.

The first capability message includes bandcombination and featuresetcombination. BandCombination refers to a band combination of NR carrier aggregation (CA), NR non-CA, and/or multi-radio dual connectivity (MR-DC), and FeatureSetCombination refers to a combination of a set of functions supported by the UE.

According to an existing standard, the following is defined: 1. In CA, dual connectivity (DC), or a single carrier, BandCombination is associated with FeatureSetCombination; and 2. featureSetCombinationDAPS (FSC-DAPS) is newly defined for DAPS. If the UE supports DAPS in CA or DC, bandcombination of CA or DC is associated with FSC-DAPS. The base station can determine whether the UE supports DAPS based on information such as bandcombination and FSC-DAPS.

However, the current standard does not support DAPS handover in SUL bandcombination, and the SUL band combination has only one SUL band. This does not meet a scenario in which the target source and the target cell are configured with SUL carriers and belong to different bands. Therefore, in this application, whether the UE supports DAPS handover is determined by associating SUL bandcombination with FSC-DAPS, or by adding a band combination of SUL bandcombination-DAPS.

Optionally, before the terminal device reports the first capability message, the method further includes: The terminal device receives a capability negotiation message sent by the source cell, where the capability negotiation message indicates the terminal device to report the first capability message; and then the terminal device reports the first capability message to the source cell according to the capability negotiation message.

Optionally, a band combination formed by the source cell and the target cell that support DAPS handover in an SUL is reported to the source cell by using the first capability message. The source cell and target cell belong to a band combination that supports the SUL, and the source cell and target cell are subsets of the band combination that supports the SUL.

Optionally, the terminal device reports the band combination that supports the SUL to the source cell by using the first capability message. In addition to the source cell and the target cell for DAPS handover, the SUL band combination may include an SCell for UL CA or DL CA.

Optionally, an uplink of the source cell and an uplink the target cell may support TDM time division handover with a gap, and a gap time length is optional. For example, if the terminal device has a capability of 2T (a radio frequency capability) and a corresponding baseband processing resource (mainly including a quantity of carriers of the source cell and the target cell), concurrency of a source cell SUL 1T and a target cell SUL 1T is supported, concurrency of the source cell SUL 1T and a target cell NUL 1T is supported, concurrency of a source cell NUL 1T and the target cell NUL 1T is supported, concurrency of the source cell NUL 1T and the target cell SUL 1T is supported, TDM handover of the source cell SUL 1T and the target cell SUL 1T is supported and TDM handover time is 0 µs, TDM handover of the source cell NUL 2T and the target cell SUL 1T is supported and TDM handover time is 35.7 µs, and TDM handover of the source cell NUL 2T and the target cell SUL 2T is supported and TDM handover time is 35.7 to 140 µs.

Optionally, before the terminal device accesses the source cell, the terminal device may camp on another cell, and the another cell stores the first capability message of the terminal device. In this case, the source cell may also obtain the first capability message from the another cell on which the terminal device previously camps. A manner of obtaining the first capability message is not specifically limited in this application.

It should be understood that implementation time of S207 is not specifically limited in this application, and S207 may be completed before S203 (that is, before the DAPS handover message is received).

S208: The terminal device receives third information sent by the target cell. The third information indicates the terminal device to release the resource of the source cell. It may be understood that the third information indicates the terminal device to disable wireless communication with the source cell, and DAPS handover ends.

This embodiment provides a basic process of implementing DAPS handover in the SUL scenario. When a plurality of uplink carriers exist between the source cell or the target cell and the terminal device, the terminal device selects one of the carriers to communicate with the source cell and the target cell. In this method, a transmit channel and the baseband processing resource of the terminal device are fully utilized, interruption time caused by handover is reduced, and a data throughput and cell edge coverage are improved.

This application provides another communication method below. The communication method differs from the embodiment corresponding to FIG. 2 in that: When there are a plurality of uplink carriers between a source cell or a target cell and a terminal device, the terminal device may compare corresponding carrier frequencies, and does not release carriers with a same frequency or similar frequencies, so that a channel resource of an SUL carrier can be fully utilized and an uplink data throughput can be improved.

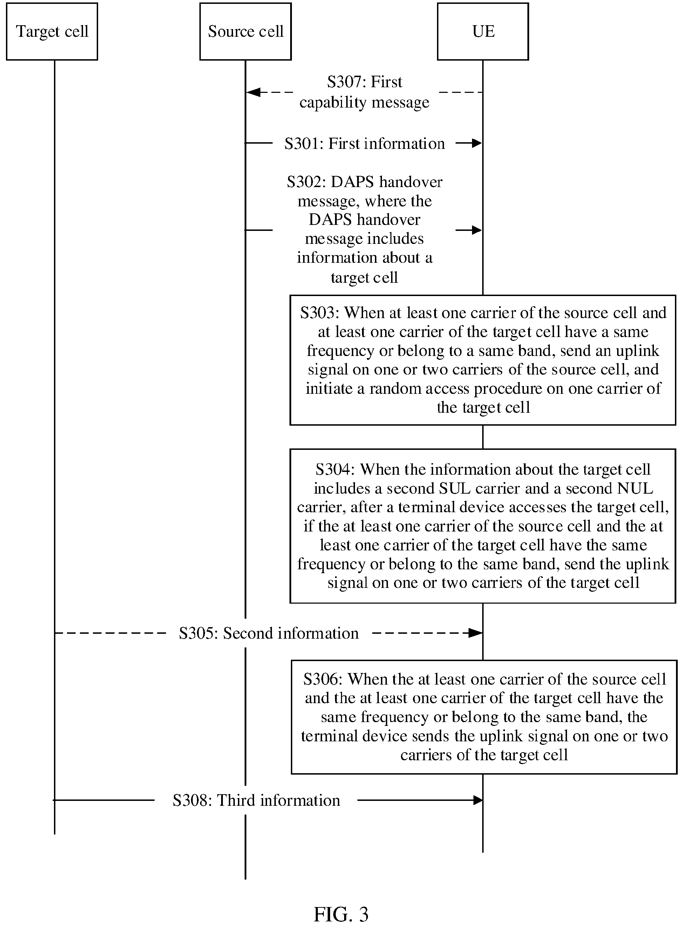

FIG. 3 is a schematic flowchart of another communication method according to this application.

Processes of S301 and S302 are the same as those of S201 and S203 in FIG. 2. For details, refer to the descriptions in S201 and S203. Details are not described herein again.

S303: When at least one carrier of a source cell and at least one carrier of a target cell have a same frequency or belong to a same band, send an uplink signal on one or two carriers of the source cell, and initiate a random access procedure on one carrier of the target cell.

Optionally, when first information includes a first SUL carrier and a first NUL carrier, information about a target cell includes a second SUL carrier and a second NUL carrier, the first SUL carrier and the first SUL carrier have a same frequency or belong to a same band, and the first NUL carrier and the second NUL carrier have a same frequency or belong to a same band, the terminal device sends the uplink signal on the first SUL carrier and the first NUL carrier, initiates the random access procedure on one of the second SUL carrier and the second NUL carrier.

Optionally, when first information includes a first SUL carrier and a first NUL carrier, information about a target cell includes a second SUL carrier, and the second SUL carrier and the first SUL carrier have a same frequency or belong to a same band, the terminal device sends the uplink signal on the first SUL carrier and the first NUL carrier, and initiates the random access procedure on the second SUL carrier.

Optionally, when first information indicates a first SUL carrier and a first NUL carrier, information about a target cell includes a second NUL carrier, and the second NUL carrier and the first NUL carrier have a same frequency or belong to a same band, the terminal device sends the uplink signal on the first SUL carrier and the first NUL carrier, and initiates the random access procedure on the second NUL carrier.

Optionally, when information about a target cell includes a second SUL carrier and a second NUL carrier, first information includes a first SUL carrier, and the second SUL carrier and the first SUL carrier have a same frequency or belong to a same band, the terminal device sends the uplink signal on the first SUL carrier, and initiates the random access procedure on one of the second SUL carrier and the second NUL carrier.

Optionally, when information about a target cell includes a second SUL carrier and a second NUL carrier, first information includes a first NUL carrier, and the second NUL carrier and the first NUL carrier have a same frequency or belong to a same band, the terminal device sends the uplink signal on the first NUL carrier, and initiates the random access procedure on one of the second SUL carrier and the second NUL carrier.

Optionally, in S304, after the terminal device successfully performs random access to the target cell, when the information about the target cell includes the second SUL carrier and the second NUL carrier, if the at least one carrier of the source cell and the at least one carrier of the target cell have a same frequency or belong to a same band, the terminal device sends an uplink signal on one or two carriers of the target cell.

Optionally, in S305, the terminal device receives second information from the target cell. The second information includes configuration information of the second SUL carrier and/or the second NUL carrier (that is, an example of a third carrier).

S306: When the at least one carrier of the source cell and the at least one carrier of the target cell have the same frequency or belong to the same band, the terminal device sends the uplink signal on one or two carriers of the target cell.

It should be understood that, when the target cell and the carrier of the target cell carrier configured in the second information include the second SUL carrier and the second NUL carrier, after the terminal device accesses the target cell, if the at least one carrier of the source cell and the at least one carrier of the target cell have the same frequency or belong to the same band, the terminal device sends the uplink signal on one or two carriers of the target cell.

Optionally, when the target cell and the carrier of the target cell configured in the second information include the second SUL carrier and the second NUL carrier, the first information includes the first SUL carrier and the first NUL carrier, the first SUL carrier and the second SUL carrier have the same frequency or belong to the same band, and the first NUL carrier and the second NUL carrier have the same frequency or belong to the same band, the terminal device sends the uplink signal on the first SUL carrier, the first NUL carrier, the second SUL carrier, and the second NUL carrier.

Optionally, when the target cell and the carrier of the target cell configured in the second information include the second SUL carrier and the second NUL carrier, the first information includes the first SUL carrier, and the second SUL carrier and the first SUL carrier have the same frequency or belong to the same band, the terminal device sends the uplink signal on the second SUL carrier, the second NUL carrier, and the first SUL carrier.

Optionally, when the target cell and the carrier of the target cell configured in the second information include the second SUL carrier and the second NUL carrier, the first information includes the first NUL carrier, and the second NUL carrier and the first NUL carrier have the same frequency or belong to the same band, the terminal device sends the uplink signal on the second SUL carrier, the second NUL carrier, and the first NUL carrier.

Only several possible cases are provided herein. Similarly, the foregoing determining may also be performed in other cases, and all cases are not described herein one by one.

Processes of S307 and S308 are basically the same as those of S207 and S208 in FIG. 2. For details, refer to the descriptions in S207 and S208. Details are not described herein again.

In this embodiment, the terminal device may determine whether carrier frequencies are the same or similar, to reduce carrier release, so as to improve a data throughput and cell edge coverage.

It should be understood that, this embodiment is specifically about how to determine an uplink carrier in an SUL scenario. This application further provides another communication method, which may cover a multi-carrier scenario.

The method includes: A terminal device receives first information from a source cell, where the first information indicates one or more carriers of the source cell; the terminal device receives a dual active protocol stack DAPS handover message from the source cell, where the DAPS handover message includes information about a target cell, and the information about the target cell indicates one or more carriers of a target cell; and when one carrier of the source cell and one carrier of the target cell have a same frequency or belong to a same band, the terminal device sends an uplink signal on one or two carriers of the source cell, and initiates a random access procedure on one carrier of the target cell.

In addition, in existing DAPS handover, handover interruption time for uplink TDM sending or downlink TDM receiving of the source cell and the target cell is not defined. A quantity of uplink channel resources of most UEs is limited. For example, UE may have only two transmit channels, and legacy UE even has only one transmit channel. If TDM handover with a gap is not defined, supporting of a DAPS handover function on the legacy UE is limited.

Therefore, this application further provides another communication method, to support uplink time division transmission. A gap exists in carrier handover. A terminal device sends uplink data on a carrier of a source cell and a carrier of a target cell in through time division multiplexing. In this case, the terminal device may not release the carrier of the source cell, to improve resource utilization and a system data throughput.

A terminal device receives first information from the source cell, where the first information indicates the carrier of the source cell, the carrier of the source cell includes at least one of a first supplementary uplink SUL carrier and a first uplink carrier, and the first SUL carrier and the first uplink carrier share a cell identifier of the source cell; receives a dual active protocol stack DAPS handover message from the source cell, where the DAPS handover message includes information about a target cell, the information about the target cell indicates a carrier of the target cell, the carrier of the target cell includes at least one of a second SUL carrier and a second uplink carrier, and the second SUL carrier and the second uplink carrier share a cell identifier of the target cell; and separately sends an uplink signal on the carrier of the source cell and the carrier of the target cell through time division multiplexing of a first time interval.

Optionally, before receiving the DAPS handover message, the terminal device sends second capability information to the source cell, where the second capability information further indicates the first time interval.

It should be understood that the foregoing embodiment in which the uplink data is sent on the carrier of the source cell and the carrier of the target cell through time division multiplexing is specifically how to use an uplink carrier in an SUL scenario. This application further provides another communication method, which may cover a multi-carrier scenario.

The method includes: receiving first information from a source cell, where the first information indicates one or more carriers of the source cell; receiving a dual active protocol stack DAPS handover message from the source cell, where the DAPS handover message includes information about a target cell, and the information about the target cell indicates one or more carriers of a target cell; and separately sending an uplink signal on a carrier of the source cell and a carrier of the target cell through time division multiplexing of a first time interval.

Optionally, before receiving the DAPS handover message, the terminal device sends second capability information to the source cell, where the second capability information further indicates the first time interval.

The foregoing describes in detail the communication method in this application, and the following describes a communication apparatus in this application.

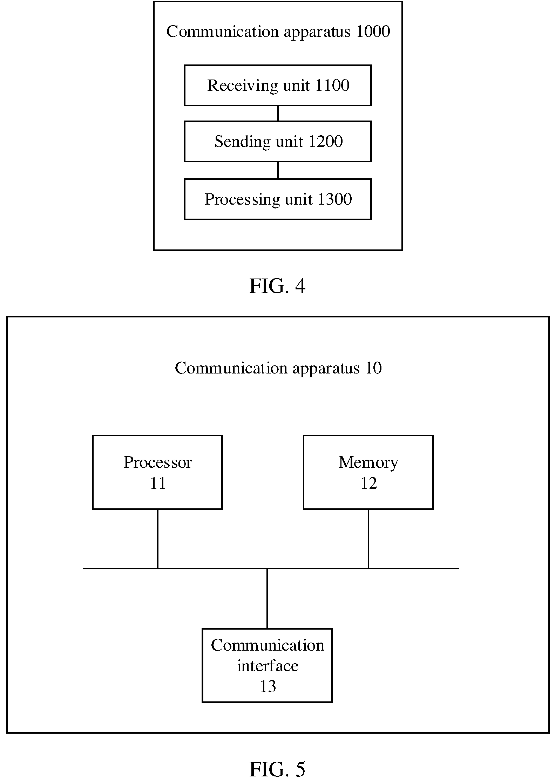

FIG. 4 is a schematic block diagram of a communication apparatus 1000 according to this application. As shown in FIG. 4, the communication apparatus 1000 includes a receiving unit 1100, a sending unit 1200, and a processing unit 1300.

The receiving unit 1100 is configured to receive first information from a source cell, where the first information indicates a carrier of the source cell, the carrier of the source cell includes at least one of a first supplementary uplink SUL carrier and a first uplink carrier, and the first SUL carrier and the first uplink carrier share a cell identifier of the source cell. The receiving unit 1100 is further configured to receive a dual active protocol stack DAPS handover message from the source cell, where the DAPS handover message includes information about a target cell, the information about the target cell indicates a carrier of the target cell, the carrier of the target cell includes at least one of a second SUL carrier and a second uplink carrier, and the second SUL carrier and the second uplink carrier share a cell identifier of the target cell. The sending unit 1200 is configured to send an uplink signal on one carrier of the source cell. The processing unit 1300 is configured to initiate a random access procedure on one carrier of the target cell.

Optionally, in an embodiment, the carrier of the source cell includes the first SUL carrier and the first uplink carrier. The processing unit 1300 is configured to indicate the sending unit 1200 to send the uplink signal only on a carrier on which a physical uplink control channel PUCCH is configured, where the carrier on which the PUCCH is configured is the first SUL carrier or the first uplink carrier.

Optionally, in another embodiment, the carrier of the source cell includes the first SUL carrier and the first uplink carrier. The processing unit 1300 is configured to indicate the sending unit 1200 to send uplink data only on the first SUL carrier.

Optionally, in another embodiment, the receiving unit 1100 receives first downlink control information DCI from the source cell, and parses the first DCI based on expectations of the first SUL carrier and the first uplink carrier.

Optionally, in another embodiment, the carrier of the target cell includes the second SUL carrier and the second uplink carrier. The processing unit 1300 is configured to indicate the sending unit 1200 to send, after accessing the target cell, the uplink signal only on a carrier on which a physical uplink control channel PUCCH is configured, where the carrier on which the PUCCH is configured is the second SUL carrier or the second uplink carrier.

Optionally, in another embodiment, the carrier of the target cell includes the second SUL carrier and the second uplink carrier. After accessing the target cell, the processing unit 1300 is configured to indicate the sending unit 1200 to send the uplink signal only on the second SUL carrier.

Optionally, in another embodiment, the processor unit 1300 is further configured to perform the following operations by using the transceiver: receiving second downlink control information DCI from the target cell, and parsing the second DCI based on expectations of the second SUL carrier and the second uplink carrier.

Optionally, in another embodiment, the carrier of the source cell includes the first SUL carrier and the first uplink carrier. Before receiving the DAPS handover message, the receiving unit 1100 is further configured to receive configuration information from the source cell, where the configuration information is used to release one of the first SUL carrier and the first uplink carrier.

Optionally, in another embodiment, the carrier of the source cell includes the first SUL carrier and the first uplink carrier. The processor unit 1300 is further configured to perform the following operations by using the transceiver: The receiving unit 1100 receives second information from the target cell, where the second information indicates a third carrier of the target cell; and sends the uplink signal on one of all the carriers indicated by the information about the target cell and the second information.

Optionally, in another embodiment, before receiving the first information, the sending unit 1200 is further configured to send a first capability message to the source cell, where the first capability message includes indication information indicating that DAPS handover is supported in an SUL scenario.

In some other solutions, the units of the communication apparatus 1000 are further configured to perform the following steps and/or operations.

The sending unit 1200 is configured to send a first capability message to a source cell, where the first capability message includes indication information indicating that DAPS handover is supported in a supplementary uplink SUL scenario. The receiving unit 1100 is configured to receive first information from the source cell, where the first information indicates a carrier of the source cell, the carrier of the source cell includes at least one of a first supplementary uplink SUL carrier and a first uplink carrier, and the first SUL carrier and the first uplink carrier share a cell identifier of the source cell. The receiving unit 1100 is further configured to receive a dual active protocol stack DAPS handover message from the source cell, where the DAPS handover message includes information about a target cell, the information about the target cell indicates a carrier of the target cell, the carrier of the target cell includes at least one of a second SUL carrier and a second uplink carrier, and the second SUL carrier and the second uplink carrier share a cell identifier of the target cell.

Optionally, in another embodiment, the carrier of the source cell includes the first SUL carrier and the first uplink carrier. Before receiving the DAPS handover message, the receiving unit 1100 is further configured to receive configuration information from the source cell, where the configuration information is used to release one of the first SUL carrier and the first uplink carrier.

Optionally, in another embodiment, the carrier of the source cell includes the first SUL carrier and the first uplink carrier. The sending unit 1200 is further configured to send an uplink signal on one carrier of the source cell. The processing unit 1300 is configured to initiate a random access procedure on one carrier of the target cell.

Optionally, in another embodiment, when the carrier of the source cell includes the first SUL carrier and the first uplink carrier, the sending an uplink signal on one carrier of the source cell includes: The sending unit 1200 is further configured to send the uplink signal only on a carrier on which a physical uplink control channel PUCCH is configured, where the carrier on which the PUCCH is configured is the first SUL carrier or the first uplink carrier.

Optionally, in another embodiment, when the carrier of the source cell includes the first SUL carrier and the first uplink carrier, the sending an uplink signal on one carrier of the source cell includes: The sending unit 1200 is further configured to send uplink data only on the first SUL carrier.

Optionally, in another embodiment, the receiving unit 1100 is further configured to receive first downlink control information DCI from the source cell, and parse the first DCI based on expectations of the first SUL carrier and the first uplink carrier.

Optionally, in another embodiment, when the carrier of the target cell includes the second SUL carrier and the second uplink carrier, after the target cell is accessed, the method further includes: The sending unit 1200 is further configured to send the uplink signal only on a carrier on which a physical uplink control channel PUCCH is configured, where the carrier on which the PUCCH is configured is the second SUL carrier or the second uplink carrier.

Optionally, in another embodiment, when the carrier of the target cell includes the second SUL carrier and the second uplink carrier, after the target cell is accessed, the method further includes: The sending unit 1200 is further configured to send the uplink signal only on the second SUL carrier.

Optionally, in another embodiment, the receiving unit 1100 is further configured to receive second downlink control information DCI from the target cell. The processing unit 1300 is further configured to parse the second DCI based on expectations of the second SUL carrier and the second uplink carrier.

Optionally, in another embodiment, after the target cell is accessed, the receiving unit 1100 is further configured to receive second information from the target cell, where the second information indicates a third carrier of the target cell. The sending unit 1200 is further configured to send the uplink signal on one of all the carriers indicated by the information about the target cell and the second information.

In some other solutions, the units of the communication apparatus 1000 are further configured to perform the following steps and/or operations.

The receiving unit 1100 is configured to receive first information from a source cell, where the first information indicates a carrier of the source cell, the carrier of the source cell includes at least one of a first supplementary uplink SUL carrier and a first uplink carrier, and the first SUL carrier and the first uplink carrier share a cell identifier of the source cell. The receiving unit 1100 is further configured to receive a dual active protocol stack DAPS handover message from the source cell, where the DAPS handover message includes information about a target cell, the information about the target cell indicates a carrier of the target cell, the carrier of the target cell includes at least one of a second SUL carrier and a second uplink carrier, and the second SUL carrier and the second uplink carrier share a cell identifier of the target cell. When the at least one carrier of the source cell and the at least one carrier of the target cell have a same frequency or belong to a same band, the sending unit 1200 is configured to send an uplink signal on one or two carriers of the source cell, and the processing unit 1300 is configured to initiate a random access procedure on one carrier of the target cell.

Optionally, in an embodiment, when the at least one carrier of the source cell and the at least one carrier of the target cell have the same frequency or belong to the same band, the sending an uplink signal on one or two carriers of the source cell includes: When the first information includes the first SUL carrier and the first NUL carrier, the information about the target cell includes the second SUL carrier, and the second SUL carrier and the first SUL carrier have a same frequency or belong to a same band, the sending unit 1200 is further configured to send the uplink signal on the first SUL carrier and the first NUL carrier.

Optionally, in an embodiment, when the at least one carrier of the source cell and the at least one carrier of the target cell have the same frequency or belong to the same band, the sending an uplink signal on one or two carriers of the source cell includes: When the first information indicates the first SUL carrier and the first NUL carrier, the information about the target cell includes the second NUL carrier, and the second NUL carrier and the first NUL carrier have a same frequency or belong to a same band, the sending unit 1200 is further configured to send the uplink signal on the first SUL carrier and the first NUL carrier.

Optionally, in another embodiment, when the carrier of the target cell includes the second SUL carrier and the second uplink carrier, after the target cell is accessed, the method further includes: when the at least one carrier of the source cell and the at least one carrier of the target cell have the same frequency or belong to the same band, sending the uplink signal on one or two carriers of the target cell.

Optionally, in another embodiment, when the at least one carrier of the source cell and the at least one carrier of the target cell have the same frequency or belong to the same band, the sending an uplink signal on one or two carriers of the target cell includes: When the information about the target cell includes the second SUL carrier and the second NUL carrier, the first information includes the first SUL carrier, and the second SUL carrier and the first SUL carrier have a same frequency or belong to a same band, the sending unit 1200 is further configured to send the uplink signal on the second SUL carrier, the second NUL carrier, and the first SUL carrier.

Optionally, in another embodiment, when the at least one carrier of the source cell and the at least one carrier of the target cell have the same frequency or belong to the same band, the sending an uplink signal on one or two carriers of the target cell includes: When the information about the target cell includes the second SUL carrier and the second NUL carrier, the first information includes the first NUL carrier, and the second NUL carrier and the first NUL carrier have a same frequency or belong to a same band, the sending unit 1200 is further configured to send the uplink signal on the second SUL carrier, the second NUL carrier, and the first NUL carrier.

Optionally, in another embodiment, the receiving unit 1100 is further configured to receive second downlink control information DCI from the target cell. The processing unit 1300 is further configured to parse the second DCI based on expectations of the second SUL carrier and the second uplink carrier.

Optionally, in another embodiment, before receiving the first information, the method further includes: The sending unit 1200 is further configured to send a first capability message to the source cell, where the first capability message includes indication information indicating that DAPS handover is supported in an SUL scenario.

In some other solutions, the units of the communication apparatus 1000 are further configured to perform the following steps and/or operations.

The receiving unit 1100 is configured to receive first information from a source cell, where the first information indicates one or more carriers of the source cell. The receiving unit 1100 is further configured to receive a dual active protocol stack DAPS handover message from the source cell, where the DAPS handover message includes information about a target cell, and the information about the target cell indicates one or more carriers of a target cell. When one carrier of the source cell and one carrier of the target cell have a same frequency or belong to a same band, the sending unit 1200 is configured to send an uplink signal on one or two carriers of the source cell, and the processing unit 1300 is configured to initiate a random access procedure on one carrier of the target cell.

Optionally, in an embodiment, when the carrier of the target cell includes a plurality of carriers, after the target cell is accessed, the method further includes: When the at least one carrier of the source cell and the at least one carrier of the target cell have a same frequency or belong to a same band, the sending unit 1200 is further configured to send the uplink signal on one or two carriers of the target cell.

In some other solutions, the units of the communication apparatus 1000 are further configured to perform the following steps and/or operations.

The receiving unit 1100 is configured to receive first information from a source cell, where the first information indicates a carrier of the source cell, the carrier of the source cell includes at least one of a first supplementary uplink SUL carrier and a first uplink carrier, and the first SUL carrier and the first uplink carrier share a cell identifier of the source cell. The receiving unit 1100 is further configured to receive a dual active protocol stack DAPS handover message from the source cell, where the DAPS handover message includes information about a target cell, the information about the target cell indicates a carrier of the target cell, the carrier of the target cell includes at least one of a second SUL carrier and a second uplink carrier, and the second SUL carrier and the second uplink carrier share a cell identifier of the target cell. The sending unit 1200 separately sends an uplink signal on the carrier of the source cell and the carrier of the target cell through time division multiplexing of a first time interval.

Optionally, in an embodiment, before receiving the DAPS handover message, the method further includes: The sending unit 1200 is further configured to send second capability information to the source cell, where the second capability information indicates the first time interval.

Optionally, in another embodiment, before receiving the first information, the method further includes: The sending unit 1200 is further configured to send a first capability message to the source cell, where the first capability message includes indication information indicating that DAPS handover is supported in an SUL scenario.

In some other solutions, the units of the communication apparatus 1000 are further configured to perform the following steps and/or operations.

The receiving unit 1100 is configured to receive first information from a source cell, where the first information indicates one or more carriers of the source cell. The receiving unit 1100 is further configured to receive a dual active protocol stack DAPS handover message from the source cell, where the DAPS handover message includes information about a target cell, and the information about the target cell indicates one or more carriers of the target cell. The sending unit is configured to separately send an uplink signal on the carrier of the source cell and the carrier of the target cell through time division multiplexing of a first time interval.

Optionally, in another embodiment, before receiving the DAPS handover message, the method further includes: The sending unit 1200 is further configured to send second capability information to the source cell, where the second capability information indicates the first time interval.

Optionally, the receiving unit 1100 and the sending unit 1200 in the communication apparatus 1000 may also be integrated into a transceiver unit, and have both a receiving function and a sending function. This is not limited herein.

In an implementation, the communication apparatus 1000 may be the terminal device in the method embodiments. In this implementation, the receiving unit 1100 may be a receiver, and the sending unit 1200 may be a transmitter. Alternatively, the receiver and the transmitter may be integrated into a transceiver.

In another implementation, the communication apparatus 1000 may be a chip or an integrated circuit in the terminal device. In this implementation, the receiving unit 1100 and the sending unit 1200 may be a communication interface or an interface circuit. For example, the receiving unit 1100 is an input interface or an input circuit, and the sending unit 1200 is an output interface or an output circuit.

The processing unit 1300 may be a processing apparatus. A function of the processing apparatus may be implemented by hardware, or may be implemented by hardware executing corresponding software. For example, the processing apparatus may include at least one processor and at least one memory. The at least one memory is configured to store a computer program. The at least one processor reads and executes the computer program stored in the at least one memory, to enable the communication apparatus 1000 to perform operations and/or processing performed by the terminal device in the method embodiments.

Optionally, the processing apparatus may include only the processor, and the memory configured to store the computer program is located outside the processing apparatus. The processor is connected to the memory through a circuit/wire, to read and execute the computer program stored in the memory. Optionally, in some examples, the processing apparatus may alternatively be a chip or an integrated circuit.

FIG. 5 is a schematic diagram of a structure of a communication apparatus 10 according to this application. As shown in FIG. 5, the communication apparatus 10 includes one or more processors 11, one or more memories 12, and one or more communication interfaces 13. The processor 11 is configured to control the communication interface 13 to receive and send signals. The memory 12 is configured to store a computer program. The processor 11 is configured to invoke the computer program from the memory 12 and run the computer program, so that procedures and/or operations performed by the terminal device in the method embodiments of this application are performed.

For example, the processor 11 may have a function of the processing unit 1300 shown in FIG. 4, and the communication interface 13 may have a function of the sending unit 1200 and/or the receiving unit 1100 shown in FIG. 4. Specifically, the processor 11 may be configured to perform processing or operations internally performed by the terminal device in the method embodiments, and the communication interface 13 is configured to perform sending and/or receiving actions performed by the terminal device in the method embodiments.

In an implementation, the communication apparatus 10 may be the terminal device in the method embodiments. In this implementation, the communication interface 13 may be a transceiver. The transceiver may include a receiver and a transmitter. Optionally, the processor 11 may be a baseband apparatus, and the communication interface 13 may be a radio frequency apparatus.

In another implementation, the communication apparatus 10 may be a chip or an integrated circuit installed in a terminal device. In this implementation, the communication interface 13 may be an interface circuit or an input/output interface.

Optionally, the memory and the processor in the foregoing apparatus embodiments may be physically independent units, or the memory may be integrated into the processor. This is not limited in this specification.

In addition, this application further provides a computer-readable storage medium. The computer-readable storage medium stores computer instructions. When the computer instructions are run on a computer, operations and/or procedures performed by the terminal device in the method embodiments of this application are performed.

In addition, this application further provides a computer program product. The computer program product includes computer program code or instructions. When the computer program code or the instructions is/are run on a computer, operations and/or procedures performed by the terminal device in the method embodiments of this application are performed.

In addition, this application further provides a chip. The chip includes a processor. A memory configured to store a computer program is disposed independent of the chip. The processor is configured to execute the computer program stored in the memory, to perform operations and/or processing performed by the terminal device in any method embodiment.

Further, the chip may include a communication interface. The communication interface may be an input/output interface, an interface circuit, or the like. Further, the chip may include the memory.

In addition, this application further provides a communication apparatus (for example, may be a chip), including a processor and a communication interface. The communication interface is configured to receive a signal and transmit the signal to the processor. The processor processes the signal, so that operations and/or processing performed by the terminal device in any method embodiment are performed.

In addition, this application further provides a communication apparatus, including at least one processor, where the at least one processor is coupled to at least one memory, and the at least one processor is configured to execute a computer program or instructions stored in the at least one memory, so that operations and/or processing performed by the terminal device in any method embodiment are performed.

In addition, this application further provides a terminal device, including a processor, a memory, and a transceiver. The memory is configured to store a computer program. The processor is configured to: invoke and run the computer program stored in the memory, and control the transceiver to receive and send a signal, so that the terminal device performs operations and/or processing performed by the terminal device in any method embodiment.

A processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

A memory in embodiments of this application may be a volatile memory or a nonvolatile memory, or may include both a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), and is used as an external cache. Through example but not limitative description, RAMs in many forms are available, such as a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DRRAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

The term "and/or" in this application describes only an association relationship for describing associated objects and represents that three relationships may exist. For example, A and/or B may represent the following three cases: Only A exists, both A and B exist, and only B exists. A, B, and C each may be singular or plural. This is not limited.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

Further embodiments of the present application are provided in the following. It should be noted that the numbering used in the following section does not necessarily need to comply with the numbering used in the previous sections.
Embodiment 1. A communication method, comprising:
   receiving first information from a source cell, wherein the first information indicates a carrier of the source cell, the carrier of the source cell comprises at least one of a first supplementary uplink SUL carrier and a first uplink carrier, and the first SUL carrier and the first uplink carrier share a cell identifier of the source cell;
   receiving a dual active protocol stack DAPS handover message from the source cell, wherein the DAPS handover message comprises target cell information, the target cell information indicates a carrier of a target cell, the carrier of the target cell comprises at least one of a second SUL carrier and a second uplink carrier, and the second SUL carrier and the second uplink carrier share a cell identifier of the target cell; and
   sending an uplink signal on one carrier of the source cell, and initiating a random access procedure on one carrier of the target cell.
Embodiment 2. The method according to embodiment 1, wherein
   when the carrier of the source cell comprises the first SUL carrier and the first uplink carrier, the sending an uplink signal on one carrier of the source cell comprises:
   sending the uplink signal only on a carrier on which a physical uplink control channel PUCCH is configured, wherein the carrier on which the PUCCH is configured is the first SUL carrier or the first uplink carrier.
Embodiment 3. The method according to embodiment 1, wherein
   when the carrier of the source cell comprises the first SUL carrier and the first uplink carrier, the sending an uplink signal on one carrier of the source cell comprises:
   sending the uplink signal only on the first SUL carrier.
Embodiment 4. The method according to embodiment 2 or 3, further comprising:
   receiving first downlink control information DCI from the source cell, and parsing the first DCI based on expectations of the first SUL carrier and the first uplink carrier.
Embodiment 5. The method according to any one of embodiments 1 to 4, wherein
   when the carrier of the target cell comprises the second SUL carrier and the second uplink carrier, after accessing the target cell, the method further comprises:
   sending the uplink signal only on a carrier on which a physical uplink control channel PUCCH is configured, wherein the carrier on which the PUCCH is configured is the second SUL carrier or the second uplink carrier.
Embodiment 6. The method according to any one of embodiments 1 to 4, wherein
   when the carrier of the target cell comprises the second SUL carrier and the second uplink carrier, after accessing the target cell, the method further comprises:
   sending the uplink signal only on the second SUL carrier.
Embodiment 7. The method according to embodiment 5 or 6, further comprising:
   receiving second downlink control information DCI from the target cell, and parsing the second DCI based on expectations of the second SUL carrier and the second uplink carrier.
Embodiment 8. The method according to any one of embodiments 1 to 7, wherein
   the carrier of the source cell comprises the first SUL carrier and the first uplink carrier; and
   before the receiving a DAPS handover message, the method further comprises:
      receiving configuration information from the source cell, wherein the configuration information is used to release one of the first SUL carrier and the first uplink carrier.
Embodiment 9. The method according to any one of embodiments 1 to 8, wherein
   after accessing the target cell, the method further comprises:
   receiving second information from the target cell, wherein the second information indicates a third carrier of the target cell; and
   sending the uplink signal on one of all the carriers indicated by the target cell information and the second information.
Embodiment 10. The method according to any one of embodiments 1 to 9, wherein
   before the receiving first information, the method further comprises:
   sending a first capability message to the source cell, wherein the first capability message comprises indication information indicating that DAPS handover is supported in an SUL scenario.
Embodiment 11. A communication apparatus, comprising:
   a processor and a transceiver coupled to the processor, wherein
   the processor is configured to perform the following steps by using the transceiver:
      receiving first information from a source cell, wherein the first information indicates a carrier of the source cell, the carrier of the source cell comprises at least one of a first supplementary uplink SUL carrier and a first uplink carrier, and the first SUL carrier and the first uplink carrier share a cell identifier of the source cell;
      receiving a dual active protocol stack DAPS handover message from the source cell, wherein the DAPS handover message comprises target cell information, the target cell information indicates a carrier of the target cell, the carrier of the target cell comprises at least one of a second SUL carrier and a second uplink carrier, and the second SUL carrier and the second uplink carrier share a cell identifier of the target cell; and
      sending an uplink signal on one carrier of the source cell, and initiating a random access procedure on one carrier of the target cell.
Embodiment 12. The communication apparatus according to embodiment 11, wherein
   the carrier of the source cell comprises the first SUL carrier and the first uplink carrier; and
   the processor is configured to perform the following step by using the transceiver: sending the uplink signal only on a carrier on which a physical uplink control channel PUCCH is configured, wherein the carrier on which the PUCCH is configured is the first SUL carrier or the first uplink carrier.
Embodiment 13. The communication apparatus according to embodiment 11, wherein
   the carrier of the source cell comprises the first SUL carrier and the first uplink carrier; and
   the processor is configured to send the uplink signal only on the first SUL carrier by using the transceiver.
Embodiment 14. The communication apparatus according to embodiment 12 or 13, wherein
   the processor is configured to perform the following steps by using the transceiver: receiving first downlink control information DCI from the source cell, and parsing the first DCI based on expectations of the first SUL carrier and the first uplink carrier.
Embodiment 15. The communication apparatus according to any one of embodiments 11 to 14, wherein
   the carrier of the target cell comprises the second SUL carrier and the second uplink carrier; and
   the processor is configured to perform the following step by using the transceiver: after accessing the target cell, sending the uplink signal only on a carrier on which a physical uplink control channel PUCCH is configured, wherein the carrier on which the PUCCH is configured is the second SUL carrier or the second uplink carrier.
Embodiment 16. The communication apparatus according to any one of embodiments 11 to 14, wherein
   the carrier of the target cell comprises the second SUL carrier and the second uplink carrier; and
   the processor is configured to perform the following step by using the transceiver:
      sending the uplink signal only on the second SUL carrier after accessing the target cell.
Embodiment 17. The communication apparatus according to embodiment 15 or 16, wherein
   the processor is configured to perform the following steps by using the transceiver: receiving second downlink control information DCI from the target cell, and parsing the second DCI based on expectations of the second SUL carrier and the second uplink carrier.
Embodiment 18. The communication apparatus according to any one of embodiments 11 to 17, wherein
   the carrier of the source cell comprises the first SUL carrier and the first uplink carrier; and
   the processor is configured to perform the following step by using the transceiver: before receiving the DAPS handover message, receiving configuration information from the source cell, wherein the configuration information is used to release one of the first SUL carrier and the first uplink carrier.
Embodiment 19. The communication apparatus according to any one of embodiments 11 to 18, wherein
   the carrier of the source cell comprises the first SUL carrier and the first uplink carrier; and
   the processor is configured to perform the following steps by using the transceiver:
      receiving second information from the target cell, wherein the second information indicates a third carrier of the target cell; and
      sending the uplink signal on one of all the carriers indicated by the target cell information and the second information.
Embodiment 20. The communication apparatus according to any one of embodiments 11 to 19, wherein
   the processor is configured to perform the following step by using the transceiver:
   before receiving the first information, sending a first capability message to the source cell, wherein the first capability message comprises indication information indicating that DAPS handover is supported in an SUL scenario.
Embodiment 21. A communication apparatus, comprising a processor and an interface circuit, wherein the interface circuit is configured to receive computer program instructions and transmit the computer program instructions to the processor, and the processor is configured to run the computer program instructions to implement the method according to any one of embodiments 1 to 10.
Embodiment 22. A communication apparatus, comprising at least one processor, wherein the at least one processor is coupled to at least one memory, and the at least one processor is configured to run computer program instructions stored in the at least one memory, to implement the method according to any one of embodiments 1 to 10.
Embodiment 23. A computer-readable storage medium, wherein the computer-readable storage medium stores a computer program, and when the computer program is executed, the method according to any one of embodiments 1 to 10 is implemented.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information from a source cell, wherein the first information indicates a carrier of the source cell, the carrier of the source cell comprises at least one of a first supplementary uplink SUL carrier and a first uplink carrier, and the first SUL carrier and the first uplink carrier share a cell identifier of the source cell;
receiving configuration information from the source cell, where the configuration information is used to release the at least one of a first supplementary uplink SUL carrier;
receiving a dual active protocol stack DAPS handover message from the source cell, wherein the DAPS handover message comprises target cell information, the target cell information indicates a carrier of a target cell, the carrier of the target cell comprises at least one of a second SUL carrier and a second uplink carrier, or the carrier of the target cell comprises a second uplink carrier, and the second SUL carrier and the second uplink carrier share a cell identifier of the target cell; and
sending an uplink signal on the first uplink carrier of the source cell, and initiating a random access procedure on the second uplink carrier of the target cell.

2. The method according to claim 1, wherein
sending an uplink signal on the first uplink carrier of the source cell, a physical uplink control channel PUCCH is configured on the first uplink carrier of the source cell.

3. The method according to claim 2, further comprising:
receiving first downlink control information DCI from the source cell, and parsing the first DCI based on expectations of the first SUL carrier and the first uplink carrier.

4. The method according to any one of claims 1 to 3, wherein
when the carrier of the target cell comprises the second SUL carrier and the second uplink carrier, after accessing the target cell, the method further comprises:
sending the uplink signal only on a carrier on which a physical uplink control channel PUCCH is configured, wherein the carrier on which the PUCCH is configured is the second SUL carrier or the second uplink carrier.

5. The method according to any one of claims 1 to 3, wherein
when the carrier of the target cell comprises the second SUL carrier and the second uplink carrier, after accessing the target cell, the method further comprises:
sending the uplink signal only on the second SUL carrier.

6. The method according to claim 4 or 5, further comprising:
receiving second downlink control information DCI from the target cell, and parsing the second DCI based on expectations of the second SUL carrier and the second uplink carrier.

7. The method according to any one of claims 1 to 6, wherein
after accessing the target cell, the method further comprises:
receiving second information from the target cell, wherein the second information indicates a third carrier of the target cell; and
sending the uplink signal on one of all the carriers indicated by the target cell information and the second information.

8. The method according to any one of claims 1 to 7, wherein
before the receiving first information, the method further comprises:
sending a first capability message to the source cell, wherein the first capability message comprises indication information indicating that DAPS handover is supported in an SUL scenario.

9. A communication method, applied to a source network device, comprising:
sending first information, wherein the first information indicates a carrier of a source cell, the carrier of the source cell comprises at least one of a first supplementary uplink SUL carrier and a first uplink carrier, and the first SUL carrier and the first uplink carrier share a cell identifier of the source cell;
sending configuration information, where the configuration information is used to release the at least one of a first supplementary uplink SUL carrier;
sending a dual active protocol stack DAPS handover message, wherein the DAPS handover message comprises target cell information, the target cell information indicates a carrier of a target cell, the carrier of the target cell comprises at least one of a second SUL carrier and a second uplink carrier, or the carrier of the target cell comprises a second uplink carrier, and the second SUL carrier and the second uplink carrier share a cell identifier of the target cell; and
receiving an uplink signal on the first uplink carrier of the source cell.

10. A communication system, comprising a source network device and a terminal device:
the source network device is configured to send first information to the terminal device, wherein the first information indicates a carrier of a source cell, the carrier of the source cell comprises at least one of a first supplementary uplink SUL carrier and a first uplink carrier, and the first SUL carrier and the first uplink carrier share a cell identifier of the source cell;
the source network device is further configured to send configuration information to the terminal device, where the configuration information is used to release the at least one of a first supplementary uplink SUL carrier;
the source network device is further configured to send a dual active protocol stack DAPS handover message, wherein the DAPS handover message comprises target cell information, the target cell information indicates a carrier of a target cell, the carrier of the target cell comprises at least one of a second SUL carrier and a second uplink carrier, or the carrier of the target cell comprises a second uplink carrier, and the second SUL carrier and the second uplink carrier share a cell identifier of the target cell; and
the terminal device, configured to send an uplink signal on the first uplink carrier of the source cell and initiating a random access procedure on the second uplink carrier of the target cell.

11. A communication apparatus, configured to perform the method according to any one of claims 1 to 8.

12. A communication apparatus, configured to perform the method according to claim 9.
